# EUROPEAN PATENT SPECIFICATION

(11) **EP 1 662 899 B1**
(45) Date of publication and mention of the grant of the patent: **10.12.2008**
(21) Application number: 04761484.7
(22) Date of filing: 27.08.2004
(51) Int. Cl.: A23L 1/19, A23D 7/00

(54) **UHT TREATED 100 % NON DAIRY WHIPPING CREAM**
UHT BEHANDELTE 100% MILCHPRODUKTFREIE SCHLAGSAHNE
CREME A FOUETTER 100 % NON LAITIERE ET TRAITEE A ULTRA-HAUTE TEMPREATURE (UHT)

(30) Priority: 29.08.2003 US 652743
(43) Date of publication of application: 07.06.2006
(73) Proprietor: PURATOS N.V., 1702 Groot-Bijgaarden (BE)
(72) Inventor: ARNOULD, Michel, B-1700 Dilbeek (BE); DOMBREE, Anne, B-1170 Brussels (BE); LAUWERS, Nicolas, 1141 Budapest (HU); ROEKAERT, Dries, B-1700 Dilbeek (BE)
(74) Representative: pronovem
(86) International application number: PCT/BE2004/000123
(87) International publication number: WO 2005/020713

(56) References cited:
- EP-A- 1 430 790
- WO-A-20/04052114
- US-A- 4 808 334
- US-A- 5 336 514
- US-A- 5 962 058
- US-A- 6 117 473
- US-A1- 2002 119 238
- US-A1- 2003 104 110

## Description

### Field of the invention

The invention relates to a UHT treated whippable oil-in-water emulsion storable up to 20 °C that has a very high overrun and/or shape stability and/or texture stability, with a fat phase that is fully hydrogenated vegetable oil with less than 2 % of trans fatty acids, no dairy products or any other proteins being used in said oil-in-water emulsion.

### Background of the invention

All over the world there is a high demand for whippable oil-in-water emulsions that after being whipped show a very high overrun (350 to 400 %, also referred to as an overrun of 3.5 to 4) and shape stability for making decorations on cakes and for using as filling or topping on all kind of desserts. Moreover these whipped products are expected to have a very smooth texture that is preserved in time.

Products with the above-described properties do exist, see for instance US patent US6,117,473. However, products now on the market are vegetable whipping creams that are pasteurized and need to be frozen immediately after production. This frozen storage and transport involves an expensive and complicated logistic chain to the customer. These creams may or may not contain dairy products. The latter function as emulsifier and in some cases are added to have a nicer taste.

To eliminate the whole frozen transport and storage chain, UHT treated creams have been developed, which can be stored at ambient temperature. However, these creams do not have the desired stability, texture and mouthfeel.

US 2002/0119238 relates to a creamy, milk-free oil-in-water emulsion which comprises an aqueous phase, which contains water, water-soluble carbohydrate, hydrocolloid and optionally further hydrophilic constituents and an oil phase, which contains edible oil and/or edible fat, emulsifier and optionally further lipophilic constituents; but fails to provide a product cohibiting an overrun higher than 3.5.

### Aims of the invention

It is an aim of the invention to provide a non-dairy whipping cream with the properties of a pasteurized vegetable whipping cream but which is storable at room temperature.

It is another aim of the invention to provide a UHT treated non-dairy whipping cream having otherwise the properties of a pasteurized product.

It is a further aim of the invention to provide such whipping cream with high shape stability after whipping and with the right texture.

It is still a further aim to provide such creams that follow recent trends in food consumption, demanding products free of any dairy or protein source and with less than 2 % of trans fatty acids.

### Description of the figures

The figure 1 represents the surface texture of a product with reference score 1.

The figure 2 represents the surface texture of a product with reference score 6.

### Summary of the invention

The present invention relates to an UHT treated non-dairy vegetable oil-in-water emulsion for whipping, a method for preparing a whipped product and its uses according to claims 1 to 11.

The present invention relates to an UHT treated non-dairy vegetable oil-in-water emulsion for whipping with a very high shape stability after whipping. Said stability corresponds to a shape stability index of 55-60 or higher as indicated in table 4.

The present invention further relates to an UHT treated non-dairy vegetable oil-in-water emulsion for whipping to give a whipped product that has at least a very good surface texture as indicated in table 5. Said surface texture of said whipped product corresponds to an average score of 5 to 6.

The emulsions of the present invention have an overrun of at least 3.5.

A product according to the invention has a high shape stability after whipping and/or has a very good surface texture and/or has an overrun of at least 3.5. A preferred product of the invention combines these three aspects.

The non-dairy whipping creams contain less than 2 % of trans fatty acids, are free from any dairy product or derivative and free from any protein source. Since they are UHT treated, they are storable at temperatures up to 20 °C. A most preferred product according to the invention combines the above aspects with a high shape stability after whipping, a very good surface texture and an overrun of at least 3.5.

Emulsifiers may be selected from the group consisting of polyglycerol esters, diacetyl tartaric acid esters of mono- and/or diglycerides, lactic acid esters of of mono- and/or diglycerides sodium stearoyl lactylate, lecithin, polysorbate 60 our 80, sorbitan monostearate, monoglycerides and/or may be any combinations thereof, the total concentration being between 0,3 and 1,2 %.

Stabilizing agents may be selected from the group consisting of guar, locust bean gum, xanthan, carageenan, cellulose derivative, sorbitol and/or combinations thereof, the total concentration being between 1,2 and 2,5 %..

In, the non-dairy whipping cream according to any of claims 1- 7 the fat content is between 20 and 30 % and the sweetener content between 10 and 25 %.

The invention further relates to a method to prepare a whipped product from a non-dairy whipping cream as described above. If whipping is doze on a Kenwood Major Classic, the whipping is done at speed 1 to 2 during 30 seconds to 2 minutes, then at speed 3 to 5 until optimal consistency is reached and then possibly at low speed (speed 1 to 2) during 1 minute.

The invention further relates to whipped toppings obtainable with such method according to claim 8, highly suitable for use in food product.

Because of their shape stability and very good surface texture after whipping the creams of the invention are highly suitable for making any decorations, toppings, fillings and the like. The invention thus also concerns the use of a non-dairy whipping cream of the invention in or on any food product and any food product decorated with a whipped topping prepared from a cream (oil-in-water emulsion) of the invention.

### Detailed description of the invention

The present invention is related to an oil-in-water type emulsion for a non-dairy whipping cream, according to any of claims 1 to 7, having an excellent emulsion stability, a high overrun after whipping and/or an extremely well shape stability including e.g. smooth texture and high texture stability after whipping.

These characteristics that are unique for UHT treated non-dairy vegetable creams are the result of a well balanced equilibrium between emulsifiers, gums and cellulose derivatives.

As mentioned above, the product is treated by UHT and as such is storable at ambient temperature (up to 20°C). As such, the new product combines positive functional properties from both pasteurized and UHT non-dairy creams. This means that the invention concerns a product storable up to 20 °C for up to 8 months with a high overrun (e.g. 350 %) and a stability after whipping suitable for making any decorations, toppings, fillings, The product scan easily be whipped until desired consistency without losing water after application.

The product of the present invention does not contain any dairy or protein source like sodium caseinate, milk powder, etc. This characteristic is found back in ready-to-use foams (e.g. US patent 6,117,473), but hitherto did not exist for UHT treated non-dairy emulsions that are to be whipped after storage of several months at ambient temperature.

Stability after whipping, texture and mouthfeel are very important characteristics for an acceptable whipping cream. International patent application WO98/31236 concerns the stability and mouthfeel of whipped products. The lack of milk and/or protein derivatives is exceptional for UHT-treated products because milk proteins e.g. account for a large part of the emulsion and shape stability of a UHT whipping cream. Where classic vegetable creams usually are called non-dairy creams to indicate the absence of animal fat despite the presence of milk proteins (caseinates, milk powder, buttermilk, ...), the product of the present invention is said to be 100 % non-dairy because there is total absence of any animal source (no animal fat and no animal proteins). In fact it is free from any protein source.

The vegetable fat that is used in a preferred embodiment of the invention is a hydrogenated palm kernel oil (composed mainly of C12:0) that is characterized by a trans fatty acids content of less than 2 %. Pasteurized products on the market generally contain partly hydrogenated fats containing more than 2 % of trans fatty acids. In a most preferred embodiment the fat blend of a product according to the invention comprises a fat blend as given in table 2. The blend contains mainly fatty acids of lauric origin (C12).

In contrast to the existing pasteurized products, there is not only a storage difference, but also a clear difference in viscosity of the emulsion which makes it easier to work with. Another advantage is that because of this difference in viscosity less product will stay in the packaging after emptying. Despite these lowered viscosity, the product has got minimal separation in the packaging as will be demonstrated below.

The invention will be further described in details in the following examples and particular embodiments by reference to the enclosed drawings, which are not in any way intended to limit the scope of the invention as claimed.

### Raw materials

The ready-to-whip food products according to the present invention include microbiologically stable oil-in-water products that can be stored as such at ambient temperature (up to 20°C) . Such products include but are not limited to whipped toppings, bakery fillings, etc. The products according to the invention contain from about 20 to 30% of fully hydrogenated, fat; from about 10 to 25% of sweetener, such as powdered/granular saccharide materials or syrup; and minor but effective amounts of stabilisers, emulsifiers, salt, flavouring and colouring agents.

The fat used in the whipped foods is vegetable fat of lauric origin, fully hydrogenated and subsequently refined for human consumption. The hydrogenated vegetable fat should preferably have a melting point of 35 to 45°C, preferably close to 37°C. The vegetable fat, of the whipped food products of the present invention contains less than 2 % of trans fatty acid. As an example, table 1 and 2 illustrate the SFC (solid fat content) profile and free fatty acid composition of a fat that is suitably for use in a product falling under the scope of the present invention.

**Table 1: SFC of vegetable oil**

| **T(°C)** | **SFC (%)** |
|---|---|
| 10 | 90-98 |
| 20 | 75-87 |
| 30 | 30-45 |
| 35 | 5-13 |

**Table 2: FFA composition**

| **Nature** | **% of the total of free fatty acids** |
|---|---|
| C 8 - caprilic acid | 2 - 5 |
| C 10 - caprinic acid | 3 - 5 |
| C 12 - lauric acid | 44 - 51 |
| C 14 - mirystic acid | 15 - 17 |
| C 16 - palmitic acid | 7 - 10 |
| C 18 - stearic acid | 23 - 29 |

The sweeteners used in the whipped foods of the present invention consist of one or more sugars, such as fructose, sucrose, dextrose and/or syrup. This list is not exhausive and may contain other sweetening carbohydrates and sugar alcohol or combinations with artificial sweeteners. Those components may be granulated or powdered.

The addition of this kind of sweeteners in the formulation will increase the dry matter content of then product and also provides body to the foam structure which will directly influence the stability of the whipped product. The addition of sweeteners is also used for taste purposes.

The stabilisers used in the whipped foods of the present invention are polysaccharides (made of natural or synthetic hydrocolloids, for example alginate, carrogeenan, locket bean gum, guar gum, xanthan gum, microcrystalline cellulose, carboxymethylcellulose), sorbitol and other food grade carbohydrates.

The function of stabilizers in the whipped foods of the present invention is attributed to their water-binding capacity by forming a three dimensional network throughout the system. In this way, they improve the mix viscosity, emulsion stability, air incorporation during and after whipping, body, texture and shape stability. The amount of stabilisers may be comprised from about 1 % to 4 %; preferably from 1,2 to 2,5 %.

The use of HLB (Hydrophilic Lipophilic Balance) values is recommended as a guide for selecting emulsifier systems, especially for foods as whipped toppings that must retain their emulsified character during a long shelf life. As a rule of thumb, oil-in-water emulsions are stabilised by HLB values in the range of 11-15.

The emulsifiers used in the whipped foods of the present invention may be non-ionic or ionic emulsifiers, which are defined by the HLB value of the respective emulsifiers. The ionic emulsifiers may be one or more emulsifiers each having an HLB of minimum 10, such as sodium stearoyl lactylate, polysorbate 60 or 80, sucrose monostearate, etc. The non-ionic emulsifiers may be one,or more emulsifiers each having an HLB of maximum 10, such as glycerol monostearate, propylene glycol monoester, distilled monoglycerides, etc.

The function of the emulsifiers in the whipped foods of the present invention is to induce the formation of a stable emulsion and improve the rate of the aeration obtained upon whipping. The amount of emulsifiers may be comprised from about 0,2 % to 2 %; preferably from 0,3 to 1,2 %.

Many types of salts may be used in the whipped foods of the present invention for flavouring and/or stabilisation, including sodium chloride, sodium or potassium citrates, phosphates, chlorides, etc. The amount of salts may be comprised from about 0,05 % to 1 %; preferably from 0,1 to 0,3 %.

Many types of flavouring agents may be used in the whipped toppings of the present, invention, such as vanilla, cream flavour, milk flavour, etc. The flavouring agents may be natural, natural identical and/or artificial.

Colouring agents may also be included in the whipped food products of the invention.

### Process

An important characteristic of toppings under the scope of the invention is the "storability at ambient temperature". This achievement was only possible through sterilisation of the product by UHT instead of pasteurisation. Both processes are identified by their specific temperature time combination as illustrated in the table below.

**Table 3: Process parameters for UHT and pasteurization treatment**

| | **UHT** | **Pasteurization** |
|---|---|---|
| Temperature | 135-150 °C | 75-85 °C |
| Time | 2-4 s | 1-3 min |

The other process steps employed to produce the vegetable cream of this invention are conventional in nature. The ingredients are dispersed or solubilised in two separate tanks, respectively an oily phase tank (vegetable oil, emulsifiers, colouring agent) and an aqueous phase tank (water, sugar, stabilisers, flavors, salts). After blending while heating to 65 °C, the two phases are mixed together. After UHT sterilisation, homogenisation and cooling to below 15 °C, the product is fed to filling equipment, being a Tetrapak or Bag-in-Box machine.

### Quality parameters

For measuring quality parameters, two new methods have been developed. The first method is a method for measuring shape stability. This stability is very important for decoration applications. The second method describes a way of measuring the surface texture of the whipped cream. As is well known to those skilled in the art, a smooth surface of a topping or decoration is very important for the final quality of the cake, dessert, ... Overrun and syneresis measurement were performed via routine methods that are only briefly explained.

### Measuring shape stability

UHT products to be analyzed are whipped between 7 and 9 °C. Pasteurized products to be analyzed are whipped between 5 and 8 °C. Whipping was done here by a Kenwood Major Classic at speed 2 during 1 minute and then at speed 3 until optimal consistency is reached. This way of whipping is used for all quality parameters to be determined and is an important factor when comparing or evaluating whipped cream characteristics.

An iron cylinder with a diameter of 65 mm and a height of 65 mm has been used in the shape stability tests. The inner wall thereof is covered with a removable plastic liner (used for cakes and bavarois) of 210 * 65 mm. The cylinder with the liner is put on a small, hard, flat plastic plate. The cylinder is filled to the top with the whipped product to be analyzed. Absolutely no air zones are allowed to be included in the cylinder. With a pastry pallet the upper surface of the "dream-cylinder" is flattened. Firstly the iron cylinder is removed and afterwards the plastic liner is also removed very carefully. The plastic plate with the remaining "cream cylinder" is put in a fridge between 4 and 8 °C.

After 20 hours, the plate is then removed from the fridge. The distance between the plastic plate and the lowest point of the upper surface of the "cream cylinder" is measured. This distance defines the shape stability of the whipped topping.

The measured height gives a figure between 0 and 65: the shape stability index. Depending of this figure, the shape stability is said to be perfect, very high, high, average, low or very low. See table 4 for this scale

**Table 4: shape stability expressed as a figure**

| **Shape stability index** | **Shape stability** |
|---|---|
| 60-65 | Perfect |
| 55-60 | Very high |
| 50-55 | High |
| 45-50 | Average |
| 40-45 | Low |
| <40 | Very low |

### Measuring surface texture

The aerated structure of the whipped product is studied by means of a comparison with reference pictures that are prepared according to the method described below.

UHT products to be analyzed are whipped between 7 and 9 °C. Pasteurized products to be analyzed are whipped between 5 and 8 °C. Whipping is done by a Kenwood Major Classic at speed 2 during 1 minute and then at speed 3 until optimal consistency is reached.

For analyzing the surface texture of the whipped product an overhead slide is put on a dark dish. On the overhead slide is put a metal hollow cylinder with a height of 4 cm and a diameter of 16 cm. After whipping, the hollow cylinder is filled so that at least the whole-volume of the cylinder is completely filled with whipped cream and no air zones are included. Then a solid smooth metal slat with a length of > 20 cm, a height of 2 cm and a width of 3 mm is used to flatten the cylinder surface by removing the surplus cream. This is done by a manual perpendicular striking movement with the metal slat where the 3 mm side is in contact with the whipped product. This movement is done twice in opposite directions.

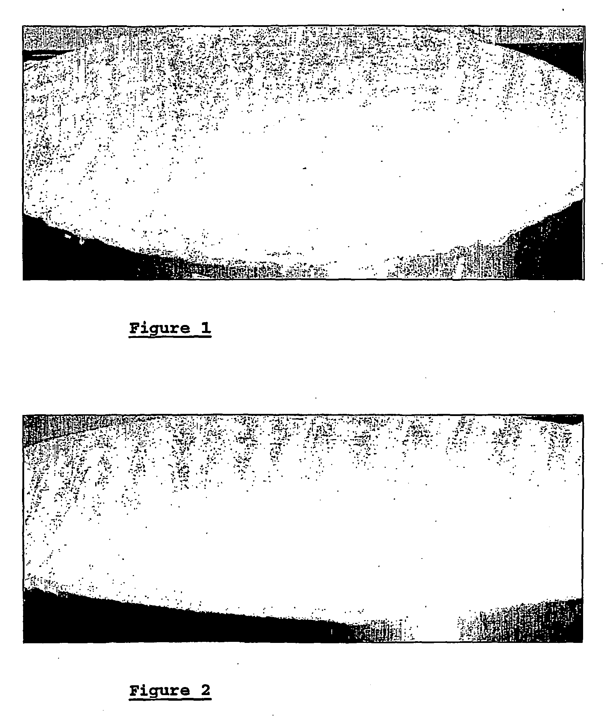

When so far, a digital picture is taken from a distance of about 20 cm under an angle of about 22,5 ° with a Kodak DX3500 against a dark background. This digital picture is compared with a series of reference pictures that each have a score from 1 (rough surface with many air bubbles, see figure 1) to 6 (smooth surface with almost no air bubbles, see figure 2) by at least 10 objective persons. Afterwards an average score is calculated. Depending on the score (score = score of the picture that resembles the most) given to the product to be analyzed, the surface texture is said to be perfect, very good, good, average, bad or very bad. See table 5 for this scale. Figures 1 and 2 represent respectively a whipped product with rough surface containing many air bubbles (average score 1) and with a smooth surface almost void of bubbles (average score 6).

**Table 5: surface texture expressed as a figure (average score)**

| **Average score** | **Surface texture** |
|---|---|
| 6 | Perfect |
| 5 | Very good |
| 4 | Good |
| 3 | Average |
| 2 | Bad |
| 1 | Very bad |

### Measuring overrun

The overrun of the resulting whipped cream is a value obtained from the following formula: "100/A" (wherein A is the weight of 100 ml of whipped cream).

### Measuring syneresis (loss of water)

To measure syneresis, 50 g of the whipped product is put in a propylene buchner-filter on a graduated cylinder and incubated in an isothermic room at 20 °C. After 20 hours, the quantity of liquid in the cylinder is measured in mm. This is a measure for the syneresis of the whipped product.

### Examples

An oily phase and an aqueous phase having the respective formulations as shown in table 6 below were prepared separately and then mixed together at 65 °C. The emulsion was sterilised at 150 °C during 4 s, homogenized in a homogenizer (200 bars) and cooled by tubular heat exchangers to below 15 °C to obtain an oil-in-water emulsion.

**Table 6: possible recipe**

| **Phase** | **Component** | | **Formulation** **(wt%)** |
|---|---|---|---|
| Oily phase | Oil | Hydrogenated palm Kernel Oil | 24 |
| | Emulsifiers | Sodium stearoyl lactylate, | 0, 3 - 0, 8 |
| | | Lecithin | |
| | | Sorbitan monostearate | |
| | | Diacetyl tartaric acid esters of mono- and diglycerides | |
| Aqueous phase | Water | Water | 54 |
| | Emulsifiers | Polysorbate 60 | 0, 05 - 0,3 |
| | Stabilise | Sorbitol | 2 - 4 |
| | Other stabilisers | Cellulose derivative | 0,1 - 0,5 |
| | | Locust bean gum / Guar gum | |
| | | Xanthan gum | |
| | | carrageenan | |
| | Sweetener | Sugar | 15 - 24 |
| | Salts | Salt | 0,05 - 0,3 |
| | Flavouring | | 0,1 - 0,3 |

| | | | |
|---|---|---|---|
| * Concentrations of raw materials can vary inbetween the given ranges in function of the type of product, desired characteristics and/or specific markets to which the product is destinated | | | |

After cooling down in the fridge to 7 °C, the product was whipped on the Kenwood Major Classic at speed 2 for 1 minute, then at speed 3 for 5 minutes and then at speed 1 for 1 minute. The overrun, texture, shape stability and syneresis are shown in table 8 and were measured as explained above.

For comparison with existing products, a standard UHT and pasteurized product are also subjected to the same quality control (see table 8). The general composition of these products (as declared on the packaging) is shown in table 7.

**Table 7: declared composition of standard UHT and pasteurized products.**

| **Components** | **UHT product** | **Pasteurized** **product** |
|---|---|---|
| | Hydrogenated vegetable fat | Partially hydrogenated vegetable fats |
| | Water | Water |
| Sweeteners | Sugar | Sugar |
| | | Glucose syrup |
| Emulsifiers | Lactic acid esters of mono- and diglycerides of fatty acids | Polysorbate 60 |
| | Sodium caseinate | Sorbitan monostearate |
| | Lecithin | Lecithin |
| | | Sodium stearoyl lactylate |
| Stabilisers | Sorbitol | Sodium alginate |
| | Microcrystalline cellulose | Modified cellulose |
| Colouring agents | β-carotene | |
| Salts | Salt | Salt |
| | Sodium citrate | |
| | Sodium phosphate | |
| Flavours | Flavouring | Flavors |

**Table 8: Quality parameters of a product of the invention (example) compared to standard UHT and Pasteurized (Pasto) products**

| | **Separation** | **Whipping** | **Overrun** | | **Shape** | **Syneresis** |
|---|---|---|---|---|---|---|
| **Product** | **(mm)** | **T (°C)** | **(%)** | **Texture** | **stability** | **(ml)** |
| | | | 3,8 | "Very | "Very | |
| Example | 0,5 | 7 | | good" | high" | 0 |
| UHT | 1 | 7 | 3,4 | "Average" | "Average" | 2 |
| | | | 3,9 | "Very | "Very | |
| Pasto | 0 | 7 | | good" | high" | 0 |

## Claims

1. An UHT treated non-dairy vegetable oil-in-water emulsion for whipping, free from any dairy product or derivative and free from any protein source, wherein the emulsion comprises:
- 20-30% fat of lauric origin, fully hydrogenated, and subsequently refined for human consumption, said fat containing less than 2 % of trans fatty acids,
- 10-25%, sweetener
- stabilizers, and
- emulsifier.

2. The non-dairy whipping cream according to claim 1, wherein the fat has a free fatty acids composition with a C8:0 content of 2-5%, a C10:0 content of 3-5%, a C12:0 content of 44-51%, a C14:0 content of 15-17%, a C16:0 content of 7-10% and a C18:0 content of 23-29%.

3. The non-dairy whipping cream according to claim 2, wherein the solid fat content profile of said fat is 90-98% at 10°C, 75-87% at 20°C, 30-45% at 30°C and 5-13% at 35°C.

4. The non-dairy whipping cream according to any of the preceding claims, wherein the emulsifies is selected from the group consisting of polyglycerol esters, diacetyl tartaric acid esters of mono- and/or diglycerides, lactic acid esters of mono- and/or diglycerides, sodium stearoyl lactylate, lecithin, polysorbate 60 or 80, sorbitan monostearate, monoglycerides and/or combinations thereof, the total concentration of emulsifiers being between 0.3 and 1. 2 % . '

5. The non-dairy whipping cream according to any of the preceding claims wherein the stabilizing agent is selected from the group consisting of guar gum, locust bean gum, xanthan gum, carrageenan, cellulose derivative, sorbitol and/or combinations thereof, the total concentration of stabilizing agent being between 1.2 and 2.5 %.

6. The oil-in-water emulsion according to any of the preceding claims having an overrun of at least 3.5.

7. The oil-in-water emulsion according to any of the preceding claims, wherein the fat is hydrogenated palm kernel oil.

8. A method to prepare a whipped product from a non-dairy vegetable oil-in-water emulsion according to any of the preceding claim, said method comprising the step of whipping a non-dairy vegetable oil-in-water emulsion according to any of claims 1 to 7.

9. Whipped topping obtainable by a method according to claim 8.

10. Use of a non-dairy vegetable oil-in-water emulsion according to any of claims 1 to 7 in a food product.

11. A method of using a non-dairy vegetable oil-in-water emulsion according to any of claims 1 to 7, said method comprising the steps of whipping the non-dairy vegetable oil-in-water emulsion as recited in claim 8, and applying the whipped topping in or on a food product.

## Patentansprüche

1. Eine UHT-behandelte milchfreie Pflanzenöl-in-Wasser-Emulsion zum Aufschlagen, die keinerlei Milchprodukt oder -derivat und keinerlei Proteinquelle enthält, wobei die Emulsion umfasst:
- 20 bis 30 % Fett laurischer Herkunft, das vollgehärtet ist und anschließend für den menschlichen Verzehr raffiniert wird, wobei das Fett weniger als 2 % Trans-Fettsäuren enthält,
- 10 bis 25 % Süßungsmittel,
- Stabilisatoren, und
- Emulgatoren.

2. Milchfreie Schlagsahne nach Anspruch 1, wobei das Fett eine Zusammensetzung aus freien Fettsäuren mit einem C8:0-Gehalt von 2 bis 5 %, einem C10:0-Gehalt von 3 bis 5 %, einem C12:0-Gehalt von 44 bis 51 %, einem C14:0-Gehalt von 15 bis 17 %, einem C16:0-Gehalt von 7 bis 10 % und einem C18:0-Gehalt von 23 bis 29 % aufweist.

3. Milchfreie Schlagsahne nach Anspruch 2, wobei das Gehaltsprofil für festes Fett 90 bis 98 % bei 10 °C, 75 bis 87 % bei 20 °C, 30 bis 45 % bei 30 °C und 5 bis 13 % bei 35 °C beträgt.

4. Milchfreie Schlagsahne nach einem der vorhergehenden Ansprüche, wobei der Emulgator ausgewählt ist aus der Gruppe bestehend aus Polyglycerolestern, Diacetylweinsäureestern von Mono- und/oder Diglyceriden, Milchsäurestern von Mono- und/oder Diglyceriden, Natriumstearoyllactylat, Lecithin, Polysorbat 60 oder 80, Sorbitanmonostearat, Monoglyceride und/oder Kombinationen davon, wobei die Gesamtkonzentration an Emulgatoren zwischen 0,3 und 1,2 % liegt.

5. Milchfreie Schlagsahne nach einem der vorhergehenden Ansprüche, wobei das Stabilisierungsmittel ausgewählt ist aus der Gruppe bestehend aus Guargummi, Johannisbrotgummi, Xanthan, Carrageen, Cellulosederivat, Sorbitol und/oder Kombinationen davon, wobei die Gesamtkonzentration an Stabilisierungsmittel zwischen 1,2 und 2,5 % liegt.

6. Öl-in-Wasser-Emulsion nach einem der vorhergehenden Ansprüche, die eine Volumenvergrößerung von mindestens 3,5 aufweist.

7. Öl-in-Wasser-Emulsion nach einem der vorhergehenden Ansprüche, wobei das Fett ein gehärtetes Palmkernöl ist.

8. Verfahren zur Herstellung eines aufgeschlagenen Produkts aus einer milchfreien Pflanzenöl-in-Wasser-Emulsion nach einem der vorhergehenden Ansprüche, wobei das Verfahren den Schritt des Aufschlagens einer milchfreien Pflanzenöl-in-Wasser-Emulsion nach einem der Ansprüche 1 bis 7 umfasst.

9. Aufgeschlagener Belag, der mittels eines Verfahrens nach Anspruch 8 erhältlich ist.

10. Verwendung einer milchfreien Pflanzenöl-in-Wasser-Emulsion nach einem der Ansprüche 1 bis 7 in einem Nahrungsmittelprodukt.

11. Verfahren zur Verwendung einer milchfreien Pflanzenöl-in-Wasser-Emulsion nach einem der Ansprüche 1 bis 7, wobei das Verfahren die Schritte des Aufschlagens der milchfreien Pflanzenöl-in-Wasser-Emulsion, wie in Anspruch 8 angeführt, und das Aufbringen des aufgeschlagenen Belags in oder auf einem Nahrungsmittelprodukt umfasst.

## Revendications

1. Emulsion huile végétale/eau non lactée traitée UHT destinée au fouettage, dépourvue de tout produit laitier ou dérivé et dépourvue de toute source de protéine, dans laquelle l'émulsion comprend :
- 20 à 30 % de matière grasse d'origine laurique, totalement hydrogénée et ultérieurement raffinée pour une consommation humaine, ladite matière grasse contenant moins de 2 % d'acides gras trans,
- 10 à 25 % d'édulcorant,
- des stabilisants, et
- des émulsifiants.

2. Crème à fouetter non lactée selon la revendication 1, dans laquelle la matière grasse a une composition dépourvue d'acides gras avec une teneur en C8 : 0 de 2 à 5 %, une teneur en C10 : 0 de 3 à 5 %, une teneur en C12 : 0 de 44 à 51 %, une teneur en C14 : 0 de 15 à 17 %, une teneur en C16 : 0 de 7 à 10 % et une teneur en C18 : 0 de 23 à 29 %.

3. Crème à fouetter non lactée selon la revendication 2, dans laquelle le profil de teneurs en matière grasse solide de ladite matière grasse est de 90 à 98 % à 10 °C, 75à87%à20°C,30à45%à30°Cet5à13%à35°C.

4. Crème à fouetter non lactée selon l'une quelconque des revendications précédentes, dans laquelle l'émulsifiant est choisi dans le groupe constitué d'esters de polyglycérol, d'esters d'acide diacétyltartrique de mono et/ou diglycérides, d'esters d'acide lactique de mono et/ou diglycérides, de stéraoyl lactylate de sodium, de lécithine, de polysorbate 60 ou 80, de monostéarate de sorbitane, de monoglycérides et/ou de combinaisons de ceux-ci, la concentration totale d'émulsifiants étant comprise entre 0,3 et 1,2 %.

5. Crème à fouetter non lactée selon l'une quelconque des revendications précédentes, dans laquelle l'agent stabilisant est choisi dans le groupe constitué de la gomme de guar, de la gomme de caroube, de la gomme de xanthane, du carraghénane, d'un dérivé de cellulose, du sorbitol et/ou de combinaisons de ceux-ci, la concentration totale d'agent stabilisant étant comprise entre 1,2 et 2,5 %.

6. Emulsion huile/eau selon l'une quelconque des revendications précédentes ayant un foisonnement d'au moins 3,5.

7. Emulsion huile/eau selon l'une quelconque des revendications précédentes, dans laquelle la matière grasse est de l'huile de palmiste hydrogénée.

8. Procédé pour préparer un produit fouetté à partir d'une émulsion huile végétale/eau non lactée selon l'une quelconque des revendications précédentes, ledit procédé comprenant l'étape consistant à fouetter une émulsion huile végétale/eau non lactée selon l'une quelconque des revendications 1 à 7.

9. Garniture fouettée pouvant être obtenue par un procédé selon la revendication 8.

10. Utilisation d'une émulsion huile végétale/eau non lactée selon l'une quelconque des revendications 1 à 7 dans un produit alimentaire.

11. Procédé d'utilisation d'une émulsion huile végétale/eau non lactée selon l'une quelconque des revendications 1 à 7, ledit procédé comprenant les étapes consistant à fouetter l'émulsion huile végétale/eau non lactée selon la revendication 8 et appliquer la garniture fouettée dans ou sur un produit alimentaire.
